# EUROPÄISCHE PATENTSCHRIFT

(11) **EP 4 328 660 B1**
(45) Veröffentlichungstag und Bekanntmachung des Hinweises auf die Patenterteilung: **06.11.2024**
(21) Anmeldenummer: 23186661.7
(22) Anmeldetag: 20.07.2023
(51) Int. Cl.: G02F 1/01

(54) **SELBSTKOMPENSIERENDER POLARISATIONSMODULATOR MIT DIREKTIONALEM PHASENSCHIEBER**
SELF-COMPENSATING POLARIZATION MODULATOR WITH DIRECTIONAL PHASE SHIFTER
MODULATEUR DE POLARISATION À AUTOCOMPENSATION UTILISANT UN DÉPHASEUR DIRECTIONNEL

(30) Priorität: 25.08.2022 DE 102022121510
(43) Veröffentlichungstag der Anmeldung: 28.02.2024
(73) Patentinhaber: Tesat-Spacecom GmbH & Co. KG, 71522 Backnang (DE)
(72) Erfinder: STRUCK, Julian, 71522 Backnang (DE)
(74) Vertreter: LKGLOBAL Lorenz & Kopf Patentanwalt Attorney at Law PartG mbB

(56) Entgegenhaltungen:
- CN-A- 110 361 876
- US-A1- 2010 067 923

## Beschreibung

### Technisches Gebiet

Die vorliegende Beschreibung betrifft optische Signalerzeugung und Signalübertragung, insbesondere die Übertragung von Informationen mittels Polarisationsmodulation. Im Speziellen betrifft die Beschreibung eine Modulatoreinheit zum Modulieren der Phase einer Polarisationskomponente eines optischen Signals, eine optische Signalübertragungsstrecke mit einer solchen Modulatoreinheit, und ein System mit einer solchen Modulatoreinheit, beispielsweise in Form eines Satelliten.

### Technischer Hintergrund

Informationen können mit technischen Mitteln übertragen werden, indem eine Informationseinheit einem bestimmten Zustand eines Trägersignals zugewiesen wird. Das Trägersignal ist üblicherweise eine elektromagnetische Welle aus einem spezifischen spektralen Bereich. Um nun eine Information auf das Trägersignal aufzuprägen, wird eine Eigenschaft des Trägersignals geändert. Die Änderung an sich oder der Zustand des Trägersignals nach der Änderung entsprechen dabei der zu übertragenden Information. Üblicherweise wird das Trägersignal in zeitlichen Abständen geändert, um hierdurch mehrere Informationseinheiten zu übertragen.

Als Informationsträger kommen je nach Trägersignal verschiedene physikalische Merkmale des Trägersignals in Frage, beispielsweise: die Amplitude, die Frequenz, die Phase und/oder die Polarisation. Wird eines dieser Merkmale über der Zeit verändert, so wird dieser Vorgang als Modulation bezeichnet.

Auf dem Signalverarbeitungspfad kommen verschiedene technische Komponenten zum Einsatz, um das Trägersignal zu bearbeiten und die gewünschte Information in das Trägersignal einzubringen, bevor das Trägersignal über die Übertragungsstrecke (leitungsgebunden oder leitungslos) übertragen wird.

Die bei der Vorbereitung und Bearbeitung des Trägersignals verwendeten Komponenten dienen dazu, das Trägersignal entsprechend zu modulieren, damit die zu übertragende Information richtig auf das Trägersignal aufgebracht wird und mit möglichst wenig Störungen und Verlusten über die Übertragungsstrecke übertragen wird.

Nun kann es aber vorkommen, dass neben der gewollten Modulation (Veränderung des Trägersignals) auch ungewollte Veränderungen des Trägersignals erfolgen, beispielsweise durch parasitäre Effekte oder andere ungewollte Eigenschaften der in die Vorbereitung des Trägersignals involvierten Komponenten. In dem Fall ist es bei einem Empfänger des Trägersignals nicht immer erkennbar, welche Veränderung des Trägersignals auf der gewollten Modulation basiert und welche Veränderung von ungewollten Effekten hervorgerufen wurde. Dadurch kann die Güte des Signals negativ beeinflusst werden.

### Beschreibung

Ausgehend davon kann es als Aufgabe betrachtet werden, den Einfluss von ungewollten Effekten einer Modulatoreinheit auf ein zur Übertragung moduliertes Trägersignal zu reduzieren oder zu eliminieren. Es kann insbesondere als Aufgabe betrachtet werden, Polarisationsfehler bei einem polarisationsmodulierten optischen Signal zu vermeiden.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem Aspekt ist eine Modulatoreinheit zum Modulieren der Phase einer Polarisationskomponente eines optischen Signals angegeben. Die Modulatoreinheit weist eine Lichtquelle, einen polarisierenden Strahlteiler und einen Phasenschieber auf. Die Lichtquelle ist ausgestaltet, ein optisches Signal auszugeben und als Eingangssignal in Richtung des polarisierenden Strahlteilers zu emittieren, wobei das optische Signal eine erste Polarisationskomponente mit einer ersten Polarisationsrichtung und eine zweite Polarisationskomponente mit einer zweiten Polarisationsrichtung enthält. Der polarisierende Strahlteiler ist ausgestaltet, das Eingangssignal in die erste Polarisationskomponente und die zweite Polarisationskomponente aufzuteilen, die erste Polarisationskomponente über eine erste optische Teilstrecke in einer ersten Richtung zu dem Phasenschieber zu leiten, und die zweite Polarisationskomponente über eine zweite optische Teilstrecke in einer zweiten Richtung zu dem Phasenschieber zu leiten, wobei die zweite Richtung der ersten Richtung entgegengesetzt ist, so dass die erste Polarisationskomponente und die zweite Polarisationskomponente den Phasenschieber in entgegensetzte Richtungen durchlaufen. Die erste optische Teilstrecke oder die zweite optische Teilstrecke enthält einen Polarisationsrotator, welcher ausgestaltet ist, eine Polarisationsrichtung von optischen Signalen, welche den Polarisationsrotator passieren, so zu verändern, dass die erste Polarisationskomponente dieselbe Polarisationsrichtung hat wie die zweite Polarisationskomponente, wenn die erste Polarisationskomponente und die zweite Polarisationskomponente auf den Phasenschieber treffen. Der Phasenschieber weist einen ersten Faraday-Rotator, einen zweiten Faraday-Rotator und einen polarisationsabhängigen Phasenmodulator auf. Der polarisationsabhängige Phasenmodulator ist entlang eines optischen Pfads durch den Phasenschieber zwischen dem ersten Faraday-Rotator und dem zweiten Faraday-Rotator angeordnet. Die erste optische Teilstrecke ist optisch mit dem ersten Faraday-Rotator gekoppelt und die zweite optische Teilstrecke ist optisch mit dem zweiten Faraday-Rotator gekoppelt. Der erste Faraday-Rotator ist so konfiguriert, dass er eine Polarisationsrichtung von passierenden optischen Signalen in einer ersten Polarisationsveränderungsrichtung verändert und der zweite Faraday-Rotator ist so konfiguriert, dass er eine Polarisationsrichtung von passierenden optischen Signalen, wie beispielsweise Licht, in einer zweiten Polarisationsveränderungsrichtung verändert. Die zweite Polarisationsveränderungsrichtung ist von der ersten Polarisationsveränderungsrichtung verschieden, so dass die erste Polarisationskomponente und die zweite Polarisationskomponente, wenn sie den polarisationsabhängigen Phasenmodulator passieren, in senkrecht zueinander stehenden Polarisationsrichtungen polarisiert sind. Der polarisationsabhängige Phasenmodulator ist ausgestaltet, eine Phasenmodulation lediglich einer Polarisationskomponente auszuführen. Der polarisierende Strahlteiler ist angeordnet, die erste Polarisationskomponente über die zweite optische Teilstrecke zu erhalten und die zweite Polarisationskomponente über die erste optische Teilstrecke zu erhalten, und die erste Polarisationskomponente und die zweite Polarisationskomponente zu einem überlagerten optischen Signal zusammenzusetzen.

Das optische Signal, wie es von der Lichtquelle ausgegeben wird, enthält also unterschiedlich polarisierte Anteile. Die unterschiedlich polarisierten Anteile werden hier als erste Polarisationskomponente und zweite Polarisationskomponenten mit der jeweiligen Polarisationsrichtung bezeichnet. Es sollte beachtet werden, dass sich bei der Verarbeitung des optischen Signals in der Modulatoreinheit die Polarisationsrichtung der Polarisationskomponenten ändert, weshalb in der Beschreibung zum besseren Verständnis sowohl auf die erste/zweite Polarisationskomponenten als auch auf die erste/zweite Polarisationsrichtung Bezug genommen wird.

Der polarisierende Strahlteiler erhält das Eingangssignal mit den überlagerten beiden Polarisationskomponenten. Eine Polarisationskomponente mit einer ersten Polarisationsrichtung passiert den polarisierenden Strahlteiler und die andere Polarisationskomponente mit einer zweiten Polarisationsrichtung wird von dem polarisierenden Stahlteiler abgelenkt. Somit wird das Eingangssignal in Abhängigkeit von der Polarisationsrichtung der Polarisationskomponenten aufgeteilt und die so aufgeteilten Polarisationskomponenten werden über unterschiedliche optische Teilstrecken und in unterschiedliche Richtungen zu dem Phasenschieber geleitet. Im Ergebnis durchlaufen jedoch beide Polarisationskomponenten beide optische Teilstrecken in entgegengesetzte Richtungen. Dabei werden die beiden Polarisationskomponenten zunächst in jeweils eine optische Teilstrecke eingespeist und zu dem Phasenschieber geleitet. Nachdem die Polarisationskomponenten den Phasenschieber passiert haben, werden die Polarisationskomponenten in die jeweils andere optische Teilstrecke gegeben und zurück zu dem polarisierenden Strahlteiler geführt.

In anderen Worten bildet der polarisierende Strahlteiler zusammen mit dem Phasenschieber und der ersten und zweiten optischen Teilstrecke einen optischen Ring. Die optischen Signale werden an dem polarisierenden Strahlteiler in den optischen Ring eingespeist und auch aus dem optischen Ring ausgegeben. Das optische Signal mit den überlagerten Polarisationskomponenten wird an dem polarisierten Strahlteiler in Abhängigkeit der Polarisationsrichtung aufgeteilt. Die beiden Polarisationskomponenten werden in entgegengesetzten Richtungen durch den optischen Ring geführt. Hierbei wird eine Polarisationskomponente in dem Phasenschieber moduliert. Sodann werden die beiden Polarisationskomponenten an dem polarisierenden Strahlteiler wieder zu einem optischen Signal überlagert. Der polarisationsabhängige Phasenmodulator wirkt nur auf eine Polarisationskomponente mit einer bestimmten Polarisationsrichtung und lässt die andere Polarisationskomponente mit einer anderen Polarisationsrichtung hinsichtlich ihrer Phase unverändert passieren. Somit handelt es sich bei dem Phasenschieber um einen richtungsabhängigen Phasenschieber.

Ein Polarisationsrotator ist in einer der optischen Teilstrecken angeordnet. Die Aufgabe des Polarisationsrotators ist es, die Polarisationsrichtung eines optischen Signals auf der entsprechenden optischen Teilstrecke zu verändern. Insbesondere wird die Polarisationsrichtung so verändert, dass beide Polarisationskomponenten nach der Veränderung der Polarisationsrichtung durch den Polarisationsrotator in dem optischen Ring dieselbe Polarisationsrichtung haben. Wenn also die erste Polarisationskomponente und die zweite Polarisationskomponente auf den Phasenschieber treffen, haben sie dieselbe Polarisationsrichtung. Damit durchlaufen die beiden Polarisationskomponenten auch einen Großteil des optischen Rings in einem Zustand, in welchem sie dieselbe Polarisationsrichtung haben. Dadurch wirken sich parasitäre und von der Polarisationsrichtung abhängige Einflüsse der Modulatoreinheit auf beide Polarisationskomponenten in gleicher Weise aus und ein unterschiedlicher Einfluss der Modulatoreinheit auf die beiden Polarisationskomponenten wird eliminiert oder stark vermindert, wodurch auch Modulationsfehler vermieden werden.

Um nun dennoch auf eine Polarisationskomponente eine Information modulieren und die Polarisation des ausgegebenen optischen Signals verändern zu können, werden die Polarisationskomponenten in dem Phasenschieber hinsichtlich ihrer Polarisationsrichtung verändert. Der erste Faraday-Rotator ist mit der ersten optischen Teilstrecke optisch gekoppelt und erhält die erste Polarisationskomponente. Der zweite Faraday-Rotator ist mit der zweiten optischen Teilstrecke optisch gekoppelt und erhält die zweite Polarisationskomponente. Wenn die Polarisationskomponenten bei dem jeweiligen Faraday-Rotator ankommen, haben sie dieselbe Polarisationsrichtung. Der erste Faraday-Rotator verändert die Polarisationsrichtung der ersten Polarisationskomponente in einer ersten Polarisationsveränderungsrichtung. Der zweite Faraday-Rotator verändert die Polarisationsrichtung der ersten Polarisationskomponente in einer zweiten Polarisationsveränderungsrichtung. Beispielsweise verändert der erste Faraday-Rotator die Polarisationsrichtung der ersten Polarisationskomponente um 45° in einer ersten Richtung (+45°) und der zweite Faraday-Rotator verändert die Polarisationsrichtung der zweiten Polarisationskomponente um 45° in einer entgegengesetzten zweiten Richtung (-45°). Somit stehen die beiden Polarisationsrichtungen senkrecht aufeinander (90°), wenn die beiden Polarisationskomponenten den polarisationsabhängigen Phasenmodulator passieren.

Der hier beschriebene Effekt kann beispielsweise erreicht werden, indem der erste Faraday-Rotator und der zweite Faraday-Rotator mit entgegengesetzt gerichteten Magnetfeldern arbeiten.

Nachdem die beiden Polarisationskomponenten den jeweiligen Faraday-Rotator sowie den polarisationsabhängigen Phasenmodulator passiert haben, werden sie durch den jeweils anderen Faraday-Rotator geführt. Hierbei erfährt jede Polarisationskomponente eine Veränderung der Polarisationsrichtung in die entgegengesetzte Richtung, bezogen auf die Richtung, in welche die Polarisation verändert wird, wenn eine Polarisationskomponente jeweils erstmals einen Faraday-Rotator passiert. Jede Polarisationskomponente hat nun wieder die Polarisationsrichtung, welche sie hatte, bevor die Polarisationskomponente auf den Phasenschieber traf. Die erste Polarisationskomponente durchläuft nun die zweite optische Teilstrecke und die zweite Polarisationskomponente durchläuft die erste optische Teilstrecke. Eine der beiden Polarisationskomponenten erfährt auf einer optischen Teilstrecke eine weitere Veränderung der Polarisationsrichtung durch den Polarisationsrotator. Nachdem die erste und zweite Polarisationskomponente den optischen Ring vollständig durchlaufen haben, treffen sie bei dem polarisierenden Strahlteiler aufeinander. Die Polarisationskomponenten kennzeichnen sich durch eine jeweilige eigene Phasenlage bzw. eine relative Phasendifferenz. An dem polarisierenden Strahlteiler werden die erste und zweite Polarisationskomponente überlagert und als moduliertes Ausgangssignal ausgegeben. Das überlagerte optische Signal enthält die Information in der Polarisation als Überlagerung der beiden Polarisationskomponenten, wovon eine phasenmoduliert ist.

Eine Bezugnahme auf den optischen Pfad in dem Phasenschieber betrifft den Weg der optischen Signale durch den Phasenschieber sowie die funktionale Anordnung der Komponenten des Phasenschiebers. Die erste Polarisationskomponente trifft über die erste optische Teilstrecke an einem ersten Anschluss auf den Phasenschieber und durchläuft dann den ersten Faraday-Rotator, den polarisationsabhängigen Phasenmodulator und den zweiten Faraday-Rotator in dieser Reihenfolge, bevor die erste Polarisationskomponente an einem zweiten Anschluss auf die zweite optische Teilstrecke ausgegeben wird. Die zweite Polarisationskomponente trifft über die zweite optische Teilstrecke an dem zweiten Anschluss auf den Phasenschieber und durchläuft diesen in entgegengesetzter Richtung, also zunächst den zweiten Faraday-Rotator, dann den polarisationsabhängigen Phasenmodulator und zuletzt den ersten Faraday-Rotator, bevor die zweite Polarisationskomponente an dem ersten Anschluss auf die erste optische Teilstrecke ausgegeben wird.

Das optische Signal, welches als Eingangssignal dient, stellt beispielsweise eine Überlagerung aus zwei orthogonalen Polarisationskomponenten dar. Der polarisationsabhängige Phasenmodulator ist ausgestaltet, eine Phaseninformation auf eine Polarisationskomponente aufzubringen.

Grundsätzlich kann die Lichtquelle ein Lichtemitter sein (beispielsweise ein Laser) oder der Ausgang eines lichtführenden Elements.

Ein Faraday-Rotator beruht auf dem Faraday-Effekt. An dem Faraday-Rotator liegt ein Magnetfeld an, wodurch die Polarisation in Abhängigkeit von der Ausbreitungsrichtung des Magnetfeldes gedreht wird. Der Faraday-Rotator kann so ausgestaltet sein, dass er die Polarisationsrichtung um einen bestimmten Wert verändert, beispielsweise +45° oder -45°.

Mit Ausnahme des polarisationsabhängigen Phasenmodulators durchlaufen beide Polarisationskomponenten denselben optischen Pfad (den o.g. optischen Ring) mit derselben Polarisationsrichtungen. Dadurch werden parasitäre Einflüsse der Modulatoreinheit auf die Phase des optischen Signals und Fehlerphasen eliminiert, insbesondere Phasenfehler, welche durch thermische und mechanische Fluktuationen der Modulatoreinheit auftreten.

Der hier verwendete polarisationsabhängige Phasenmodulator ist ein phasenverändernder Modulator, welcher auf eine Polarisationskomponente mit einer bestimmten Polarisationsrichtung eines optischen Signals wirkt, d.h. dass der polarisationsabhängige Phasenmodulator die Phase einer Polarisationskomponente verändert, wodurch sich auch die relative Phase zwischen zwei orthogonal zueinander stehenden Polarisationskomponenten des optischen Lichts verändert. Beispielsweise ist der polarisationsabhängige Phasenmodulator ein elektro-optischer Modulator, EOM. Es ist zu verstehen, dass jegliche Bezugnahme auf einen EOM in dieser Beschreibung lediglich beispielhaft erfolgt und grundsätzlich für einen polarisationsabhängigen Phasenmodulator gilt.

Beispielsweise hat der polarisationsabhängige Phasenmodulator zwei orthogonal zueinander ausgerichtete optische Achsen. Mittels elektrischer Energie, beispielsweise einer angelegten Spannung entlang einer dieser optischen Achsen, wird deren Brechungsindex modifiziert und es resultiert eine Phasenveränderung der Polarisationskomponente des optischen Signals gegenüber der anderen bzw. orthogonalen optischen Achse.

Mit der hier beschriebenen Modulatoreinheit lassen sich verschiedene Polarisationszustände eines optischen Signals einstellen. Hierbei können beispielsweise verschiedene diskrete Zustände der Polarisation eingestellt werden, indem die Phase eines beispielsweise horizontal polarisierten Anteils des optischen Signals mit Bezug zu der Phase eines beispielsweise vertikal polarisierten Anteils des optischen Signals verändert wird. Die Polarisation des optischen Signals kann aber grundsätzlich beliebig kontinuierlich verändert werden, ohne auf eine beschränkte Anzahl von Polarisationszuständen begrenzt zu sein.

Insgesamt ist die Polarisation des Ausgangssignals der Modulatoreinheit frei einstellbar zwischen zwei linearen Polarisationen (z.B. horizontal, vertikal) und zwei zirkularen Polarisationen (z.B. Z+ und Z-). Die Polarisation kann aber auch kontinuierlich auf sämtliche zwischen den diskreten Zuständen liegenden elliptischen Zustände eingestellt werden.

Gemäß einer Ausführungsform ist der erste Faraday-Rotator so konfiguriert, dass er die Polarisationsrichtung von passierenden optischen Signalen in der ersten Polarisationsveränderungsrichtung um 45° verändert, wobei der zweite Faraday-Rotator so konfiguriert ist, dass er die Polarisationsrichtung von passierenden optischen Signalen in der zweiten Polarisationsveränderungsrichtung um 45° verändert, wobei die erste Polarisationsveränderungsrichtung der zweiten Polarisationsveränderungsrichtung entgegengesetzt ist.

Durch diese Ausgestaltung sind die Polarisationsrichtungen der beiden Polarisationskomponenten orthogonal zueinander, wenn die Polarisationskomponenten den polarisationsabhängigen Phasenmodulator in entgegengesetzte Richtungen passieren. Somit wirkt der polarisationsabhängige Phasenmodulator lediglich auf eine der beiden Polarisationskomponenten.

Gemäß einer weiteren Ausführungsform ist der Polarisationsrotator eine λ/2 - Platte oder eine optische Faser, welche so angeordnet und ausgestaltet ist, dass sie die Polarisationsrichtung des passierenden optischen Signals verändert.

Die Aufgabe des Polarisationsrotators ist es, eine der beiden Polarisationskomponenten in die Polarisationsrichtung der anderen Polarisationskomponente zu bringen, wenn die beiden Polarisationskomponenten in den optischen Ring eingespeist werden. Damit durchlaufen beide Polarisationskomponenten den optischen Ring mit derselben Polarisationsrichtung (abgesehen von dem polarisationsabhängigen Phasenmodulator). Ausgangsseitig, d.h., wenn die beiden Polarisationskomponenten den optischen Ring verlassen, wird die Polarisationsrichtung einer Polarisationskomponente wieder dahingehend verändert, dass das überlagerte optische Signal zwei Polarisationskomponenten mit unterschiedlicher Polarisationsrichtung enthält. Der Polarisationsrotator verändert die Polarisationsrichtung sowohl der eingespeisten Polarisationskomponente als auch der ausgegebenen Polarisationskomponente.

Die λ/2 Wellenplatte kann durch die Verdrehung einer polarisationserhaltenden optischen Faser ersetzt werden.

Gemäß einer weiteren Ausführungsform ist die erste optische Teilstrecke und/oder die zweite optische Teilstrecke als Freistrahl-Aufbau oder als optischer Wellenleiter, beispielsweise in Form einer optischen Faser, realisiert.

Das bedeutet, dass die von dem polarisierenden Strahlteiler ausgegebenen Polarisationskomponenten entweder ohne dediziertes Übertragungsmedium (d.h., durch die Luft oder durch Vakuum) oder mithilfe von optischen Wellenleitern zu dem Phasenschieber übertragen werden. Im Falle eines Freistrahl-Aufbaus können auf jeder der optischen Teilstrecken einer oder mehrere Spiegel verwendet werden, um das jeweilige optische Signal auf der optischen Teilstrecke zu dem Phasenschieber zu lenken. Werden hingegen optische Wellenleiter verwendet, kommen vorteilhafterweise polarisationserhaltende Wellenleiter zum Einsatz.

Gemäß einer weiteren Ausführungsform weist der polarisationsabhängige Phasenmodulator einen Kristall auf, welcher ausgestaltet ist, mit einer elektrischen Spannung beaufschlagt zu werden und dabei seinen Brechungsindex zu verändern, wodurch die Phase der ersten Polarisationskomponente des optischen Signals verändert wird. Der Brechungsindex kann aber auch verändert werden, indem der Brechungsindex einer optischen Achse relativ zu einer anderen optischen Achse variiert wird. Dies kann beispielsweise erfolgen, indem eine mechanische Spannung beaufschlagt wird.

Der polarisationsabhängige Phasenmodulator kann beispielsweise ein doppelbrechendes Medium enthalten, welches bei Anlegen einer Spannung die Phase eines durch das optische Medium passierenden optischen Signals verändert.

Gemäß einer weiteren Ausführungsform ist die Modulatoreinheit ausgestaltet, die an dem Kristall anliegende elektrische Spannung über der Zeit zu variieren.

Beispielsweise enthält die Modulatoreinheit eine Energieversorgung, welche eine vorgebbare elektrische Spannung bereitstellt. Eine Steuereinheit steuert die Energieversorgung an, damit letztere eine gewünschte elektrische Spannung an den polarisationsabhängigen Phasenmodulator bereitstellt. Durch die über der Zeit variierende elektrische Spannung an dem polarisationsabhängigen Phasenmodulator wird die Phase zwischen unterschiedlich polarisierten Komponenten des optischen Signals verändert.

Gemäß einer weiteren Ausführungsform ist die Lichtquelle ausgestaltet, Licht mit einer definierten optischen Mode auszugeben.

In dem vorliegenden Zusammenhang sind die Polarisations- und Kohärenzeigenschaften des optischen Signals von Bedeutung. Beispielsweise ist die Lichtquelle ein Laser.

Laser zeichnen sich dadurch aus, dass sie optische Signale mit einer wohldefinierten Polarisation emittieren können. Damit eignen sie sich insbesondere für Anwendungen wie hier beschrieben.

Gemäß einer weiteren Ausführungsform ist die Modulatoreinheit ausgestaltet, die Lichtquelle so anzusteuern, dass die Lichtquelle kontinuierliche oder gepulste optische Signale emittiert.

Gemäß einer weiteren Ausführungsform weist die Modulatoreinheit weiterhin eine Einspeiseeinheit auf, welche insbesondere als nicht-polarisierender Strahlteiler oder Zirkulator ausgestaltet ist.

Die Einspeiseeinheit ist zwischen der Lichtquelle und dem polarisierenden Strahlteiler angeordnet und ist ausgestaltet, mindestens einen Teil des von der Lichtquelle emittierten Eingangssignals zu dem polarisierenden Strahlteiler zu lenken. Ausgangsseitig ist die Einspeiseeinheit ausgestaltet, das von dem Phasenschieber phasenmodulierte und von dem polarisierenden Strahlteiler überlagerte optische Signal zu empfangen und in eine vorgegebene Richtung zu lenken.

Die Einspeiseeinheit ist ausgestaltet, um das von dem polarisierenden Strahlteiler ausgegebene optische Signal mindestens teilweise strukturell in eine gewünschte Richtung zu lenken, damit das von dem polarisierenden Strahlteiler ausgegebene optische Signal nicht ausschließlich in Richtung der Lichtquelle, welche das Eingangssignal bereitstellt, abgibt. Das so erzeugte Ausgangssignal trägt in seiner Polarisation eine Information, die auf Seiten eines Empfängers ausgelesen und verarbeitet werden kann.

Gemäß einem weiteren Aspekt ist eine optische Signalübertragungsstrecke angegeben. Die optische Signalübertragungsstrecke weist eine Modulatoreinheit wie hierin beschrieben und einen Empfänger auf. Die Modulatoreinheit fungiert als Signalquelle bzw. Teil einer Sendeeinheit, welche ein optisches Signal ausgibt, auf dem eine Information aufgebracht ist. Die Signalquelle sendet das modulierte optische Signal in Richtung des Empfängers. Der Empfänger ist ausgestaltet, optische Signale zu empfangen. Die Modulatoreinheit ist angeordnet, das Ausgangssignal in Richtung des Empfängers zu emittieren.

Die Signalübertragungsstrecke kann für unidirektionale oder bidirektionale Signalübertragung ausgestaltet sein. Im Falle der bidirektionalen Signalübertragung gibt es mindestens zwei Kommunikationseinheiten, welche beide sowohl eine Modulatoreinheit als auch eine Empfangseinheit aufweisen.

Die hierin beschriebene Modulatoreinheit ist als Teil einer optischen Signalübertragungsstrecke implementiert. Damit ist die optische Signalübertragungsstrecke eingerichtet, Informationen mittels Polarisationsmodulation eines optischen Trägersignals zu übertragen. Die Polarisationsmodulation wird mittels der Modulatoreinheit in das optische Trägersignal eingebracht. Die Modulatoreinheit kompensiert Phasenfehler auf Grund der an der Modulation beteiligten Komponenten intrinsisch, weil zwei Polarisationskomponenten des optischen Signals den optischen Ring in entgegengesetzte Richtungen durchlaufen und eine Polarisationskomponente von dem Phasenschieber moduliert wird.

Gemäß einer Ausführungsform ist die Modulatoreinheit in einem Satelliten angeordnet. Die Modulatoreinheit kann aber in jeglichem anderen Kommunikationssystem angeordnet sein.

Gemäß einem weiteren Aspekt ist ein Satellit mit einer Modulatoreinheit wie hierin beschrieben angegeben.

Eine Modulatoreinheit wie hierin beschrieben kann beispielsweise auf optischen Signalübertragungsstrecken verwendet werden, welche zwischen zwei mobilen Einheiten (Luft-, Wasser- oder Landfahrzeuge oder Satelliten), zwischen einer mobilen Einheit und einer Gegenstelle auf der Erdoberfläche, oder zwischen zwei stationären Einheiten zum Einsatz kommen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Modulatoreinheit.
- Fig. 2: eine schematische Darstellung der Wege des optischen Signals durch eine Modulatoreinheit.
- Fig. 3: eine schematische Darstellung eines Phasenschiebers.
- Fig. 4: eine schematische Darstellung einer Modulatoreinheit.
- Fig. 5: eine schematische Darstellung einer optischen Signalübertragungsstrecke.

### Detaillierte Beschreibung von Ausführungsbeispielen

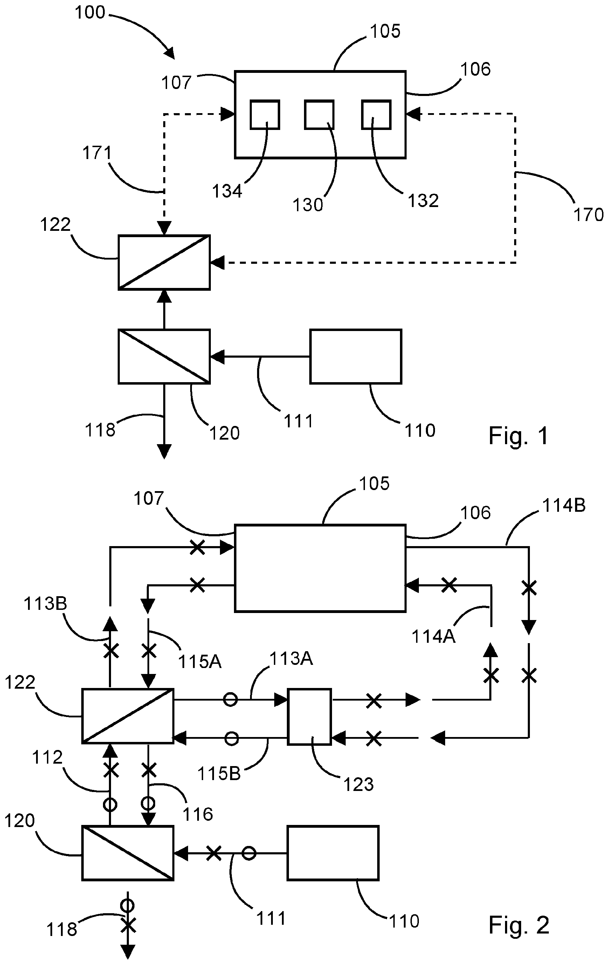

Fig. 1 zeigt den strukturellen Aufbau einer Modulatoreinheit 100 gemäß einem Beispiel. Die Modulatoreinheit 100 enthält in diesem Beispiel eine Lichtquelle 110, einen nicht-polarisierenden Strahlteiler 120, einen polarisierenden Strahlteiler 122, und einen Phasenschieber 105. Der Phasenschieber 105 enthält einen ersten Faraday-Rotator 132, einen zweiten Faraday-Rotator 134 und einen dazwischen angeordneten polarisationsabhängigen Phasenmodulator 130. In diesem Beispiel ist der polarisationsabhängige Phasenmodulator 130 ein elektro-optischer Modulators, EOM.

Die Lichtquelle 110, welche beispielsweise ein Laser ist, emittiert ein optisches Signal in Form des Eingangssignals 111. Dieses Eingangssignal wird den übrigen Komponenten zugeführt und seine Polarisation wird moduliert, um über das optische Signal Informationen zu übertragen.

Die zu übertragenden Informationen sind auf dem Ausgangssignal 118 in der Polarisation des optischen Signals moduliert.

Der Weg des optischen Signals durch die Modulatoreinheit 100 sieht damit wie folgt aus: nachdem die Lichtquelle 110 das Eingangssignal 111 emittiert, trifft das Eingangssignal 111 auf den nicht-polarisierenden Strahlteiler 120. Ein Teil des Eingangssignals 111 wird zu dem polarisierenden Strahlteiler 122 geleitet. Der polarisierende Strahlteiler 122 teilt das optische Signal basierend auf der Polarisationsrichtung der in dem optischen Signal enthaltenen Polarisationskomponenten auf. Die Polarisationskomponente mit einer ersten Polarisationsrichtung wird in der Darstellung der Fig. 1 über die erste optische Teilstrecke 170 zu dem Phasenschieber 105 übertragen. Die Polarisationskomponente mit einer zweiten Polarisationsrichtung wird in der Darstellung der Fig. 1 über die zweite optische Teilstrecke 171 zu dem Phasenschieber 105 übertragen. Die beiden Polarisationskomponenten durchlaufen den Phasenschieber 105 in entgegengesetzte Richtungen und treffen wieder auf den polarisierenden Strahlteiler 122.

Wie die Polarisation des optischen Signals moduliert wird, wird nun mit Bezug zu Fig. 2, welche ergänzend zu Fig. 1 zu betrachten ist, beschrieben.

In Fig. 2 wird der Weg des optischen Signals durch die Modulatoreinheit 100 beschrieben. Dabei wird auf den Zustand des optischen Signals zu verschiedenen Zeitpunkten bzw. an verschiedenen Punkten in der Modulatoreinheit 100 Bezug genommen.

Die in Fig. 2 gezeigten Pfeile stellen jeweils ein optisches Signal dar und zeigen an, welche Polarisationskomponenten mit welcher Polarisationsrichtung das Signal jeweils enthält. Ein Pfeil mit einem Kreuz enthält eine Polarisationskomponente mit erster Polarisationsrichtung. Ein Pfeil mit einem Kreis enthält eine Polarisationskomponente mit einer zweiten Polarisationsrichtung. Ein Pfeil mit Kreuz und Kreis enthält zwei Polarisationskomponenten, wovon jede ihre eigene Polarisationsrichtung hat.

Die Lichtquelle 110 emittiert das Eingangssignal 111, welches zwei Polarisationskomponenten mit ihren jeweiligen Polarisationsrichtungen enthält. Das Eingangssignal 111 trifft auf den nicht-polarisierenden Strahlteiler 120, wo das optische Signal in Richtung des polarisierenden Strahlteiler 122 abgelenkt wird. Zwischen 120 und 122 enthält das optische Signal 112 ebenfalls zwei Polarisationskomponenten mit ihren jeweiligen Polarisationsrichtungen.

Trifft das optische Signal 112 auf den polarisierenden Strahlteiler 122 auf, so wird dieses optische Signal 112 in Abhängigkeit der Polarisationsrichtung der Polarisationskomponenten aufgeteilt und in den optischen Ring (bestehend aus der ersten optischen Teilstrecke 170, dem Phasenschieber 105 und der zweiten optischen Teilstrecke 171) eingespeist. Die erste Polarisationskomponente mit erster Polarisationsrichtung 113A wird nach rechts auf die erste optische Teilstrecke 170 gespeist und die zweite Polarisationskomponente mit zweiter Polarisationsrichtung 113B wird nach oben auf die zweite optische Teilstrecke 171 gespeist. Zu diesem Zeitpunkt haben die optischen Signale 113A und 113B unterschiedliche Polarisationsrichtungen.

Auf der ersten optischen Teilstrecke 170 trifft das optische Signal 113A auf den Polarisationsrotator 123. Der Polarisationsrotator 123 verändert die Polarisationsrichtung der ersten Polarisationskomponente dahingehend, dass die erste Polarisationskomponente 113A nach dem Passieren des Polarisationsrotators 123 als optisches Signal 114A austritt und die zweite Polarisationsrichtung hat. Das optische Signal 114A hat damit dieselbe Polarisationsrichtung wie die zweite Polarisationskomponente 113B auf der zweiten optischen Teilstrecke 171.

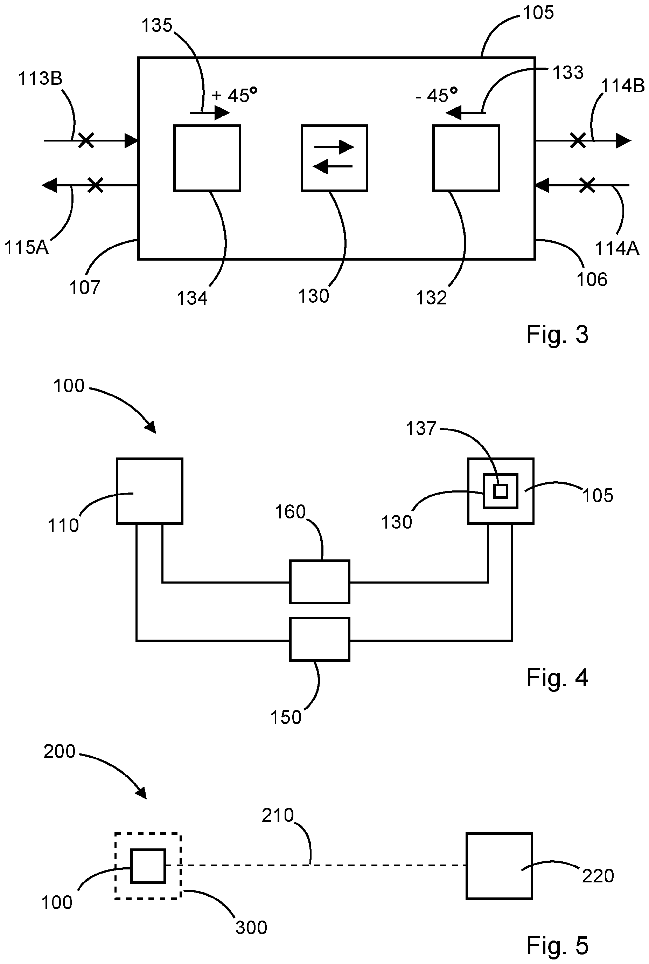

Das optische Signal 114A trifft mit der zweiten Polarisationsrichtung auf den ersten Anschluss 106 des Phasenschiebers 105. Das optische Signal 113B trifft ebenfalls mit der zweiten Polarisationsrichtung auf den zweiten Anschluss 107 des Phasenschiebers 105. bezüglich der Arbeitsweise des Phasenschiebers 105 wird auf Fig. 3 verwiesen.

Die erste Polarisationskomponente mit zweiter Polarisationsrichtung 114A tritt an dem ersten Anschluss 106 in den Phasenschieber 105 ein, wird dort verarbeitet (siehe Beschreibung mit Bezug zu Fig. 3) und verlässt den Phasenschieber 105 über den zweiten Anschluss 107 in Richtung der zweiten optischen Teilstrecke 171, wo das optische Signal das Bezugszeichen 115A hat und auf den polarisierenden Strahlteiler 122 trifft.

Die zweite Polarisationskomponente mit zweiter Polarisationsrichtung 113B tritt an dem zweiten Anschluss 107 in den Phasenschieber 105 ein, wird dort verarbeitet (siehe Beschreibung mit Bezug zu Fig. 3) und verlässt den Phasenschieber 105 über den ersten Anschluss 106 in Richtung der ersten optischen Teilstrecke 170, wo das optische Signal das Bezugszeichen 114B hat und zunächst auf den Polarisationsrotator 123 und dann auf den polarisierenden Strahlteiler 122 trifft. Wenn das optische Signal 114B als zweite Polarisationskomponente mit zweiter Polarisationsrichtung den Polarisationsrotator 123 passiert, ändert sich die Polarisationsrichtung der zweiten Polarisationskomponente und das optische Signal trifft als zweite Polarisationskomponente mit erster Polarisationsrichtung 115B auf den polarisierenden Strahlteiler 122.

Der polarisierende Strahlteiler 122 überlagert nun die erste Polarisationskomponente mit zweiter Polarisationsrichtung 115A von der zweiten optischen Teilstrecke 171 mit der zweiten Polarisationskomponente mit erster Polarisationsrichtung 115B von der ersten optischen Teilstrecke 170. Dabei entsteht das überlagerte optische Signal 116, welches nun wieder zwei Polarisationskomponenten mit zwei Polarisationsrichtung enthält. Das überlagerte optische Signal 116 trifft auf den nicht-polarisierenden Strahlteiler 120. An dieser Stelle verlässt mindestens ein Teil des optischen Signals 116 den nicht-polarisierenden Strahlteiler 120 als Ausgangssignal 118.

Fig. 3 zeigt eine detaillierte Darstellung des Phasenschiebers 105. Mit Bezug zu dieser Darstellung wird zunächst der Weg des optischen Signals von der ersten optischen Teilstrecke an dem ersten Anschluss 106 zu der zweiten optischen Teilstrecke an dem zweiten Anschluss 107 beschrieben.

Auf der rechten Seite trifft die erste Polarisationskomponente mit zweiter Polarisationsrichtung 114A auf den ersten Anschluss 106 des Phasenschiebers 105. Dieses optische Signal passiert den ersten Faraday-Rotator 132, in welchem ein erstes Magnetfeld 133 mit einer vorgegebenen Magnetfeldrichtung auf das optische Signal wirkt, wodurch die Polarisationsrichtung der ersten Polarisationskomponente mit zweiter Polarisationsrichtung 114A um -45° verändert wird. Mit der so veränderten Polarisationsrichtung wird dann das Signal 114A in den polarisationsabhängigen Phasenmodulator 130 gespeist.

Auf der linken Seite trifft die zweite Polarisationskomponente mit zweiter Polarisationsrichtung 113B auf den zweiten Anschluss 107 des Phasenschiebers 105. Dieses optische Signal passiert den zweiten Faraday-Rotator 134, in welchem ein zweites Magnetfeld 135 mit einer vorgegebenen Magnetfeldrichtung (entgegengesetzt zu der Magnetfeldrichtung des ersten Magnetfeldes 133) auf das entsprechende optische Signal wirkt, wodurch die Polarisationsrichtung der zweiten Polarisationskomponente mit zweiter Polarisationsrichtung 113B um +45° verändert wird. Mit der so veränderten Polarisationsrichtung wird dann das Signal 113B in den polarisationsabhängigen Phasenmodulator 130 gespeist.

In dem polarisationsabhängigen Phasenmodulator 130 laufen die Signale113B und 114A in entgegengesetzte Richtungen und ihre Polarisationsrichtungen verlaufen orthogonal zueinander. Der Phasenmodulator 130 moduliert nun eine Polarisationskomponente mit ihrer Polarisationsrichtung und lässt die andere Polarisationskomponente unverändert im Hinblick auf ihre Phase passieren.

Beispielhaft sei angenommen, dass der Phasenmodulator 130 die erste Polarisationskomponente 114A in ihrer Phase moduliert. Nachdem die erste Polarisationskomponente 114A den Phasenmodulator 130 passiert hat, passiert diese Polarisationskomponente 114A auch den zweiten Faraday-Rotator 134. An dieser Stelle ändert sich die Polarisationsrichtung erneut, allerdings in die entgegengesetzte Richtung und um denselben Winkelbetrag wie in dem ersten Faraday-Rotator 132. Das Signal tritt nun als erste Polarisationskomponente 115A mit zweiter Polarisationsrichtung aus dem zweiten Anschluss 107 aus und in die zweite optische Teilstrecke 171 ein. Nun hat die erste Polarisationskomponente 115A dieselbe Polarisationsrichtung, welche es auch auf der ersten optischen Teilstrecke hatte, angegeben mit dem Bezugszeichen 114A. Allerdings enthält die erste Polarisationskomponente 115A nun eine von dem Phasenmodulator 130 eingebrachte Modulation.

Weiter in diesem Beispiel passiert die zweite Polarisationskomponente 113B den Phasenmodulator 130 ohne Veränderung, weil die Polarisationsrichtung der zweiten Polarisationskomponente 113B orthogonal zu der Polarisationsrichtung der ersten Polarisationskomponente 114A ist und der Phasenmodulator 130 somit auf lediglich eine Polarisationskomponente wirkt. Die zweite Polarisationskomponente 113B passiert den ersten Faraday-Rotator 132 mit dem ersten Magnetfeld 133 und bringt die Polarisationsrichtung der zweiten Polarisationskomponente 113B wieder in die ursprüngliche Richtung. Das entsprechende optische Signal verlässt nun den Phasenschieber 105 an dem ersten Anschluss 106 als zweite Polarisationskomponente mit zweiter Polarisationsrichtung 114B.

Der Aufbau und die Funktion des Phasenschiebers 105 kann in anderen Worten und in dem hier gezeigten Beispiel wie folgt beschrieben werden: der Phasenschieber 105 enthält einen doppelberechnenden elektrooptischen Modulator (EOM), welcher den polarisationsabhängigen Phasenmodulator 130 bildet, und der zwischen zwei Faraday-Rotatoren mit gegensätzlich orientierten Magnetfeldern angeordnet ist. Die Faraday-Rotatoren drehen den Polarisationszustand des Lichtes dabei in Abhängigkeit der Propagationsrichtung um ±45°. In diesem Beispiel wird eine lineare Eingangspolarisation in den Phasenschieber verwendet. Die Faraday-Rotatoren 132, 134 an den Eingängen des Phasenschiebers 105 sorgen dafür, dass links und rechts laufendes Laserlicht orthogonale Polarisationszustände am Ort des Phasenmodulators 130 aufweisen, die mit den optischen Achsen des Phasenmodulators 130 übereinstimmen. In Kombination mit der Polarisationsabhängigkeit des Phasenmodulators 130 ergibt sich eine Phasenverschiebung des Laserstrahles, die von der Ausbreitungsrichtung abhängt. Die Polarisationszustände werden dann jeweils am zweiten Faraday-Rotator zurückgedreht. Damit bleibt Polarisationszustand vor und nach Austritt aus dem Phasenschieber 105 erhalten.

Die Umlaufrichtung des Lichtes bestimmt, ob ein Phasenhub durch den Phasenschieber 105 auftritt oder nicht. Da die Weglänge der beiden Umlaufrichtungen identisch ist und die optischen Signale sich mit derselben Polarisationsrichtung durch den optischen Ring ausbreiten, werden Phasenfluktuationen aufgrund äußerer Einflüsse (thermisch oder mechanisch) kompensiert. Die relative Phase *ϕ* zwischen den Umlaufrichtungen, die durch den Phasenschieber 105 eingebracht wird, wandelt sich im Anschluss in eine Phasendifferenz zwischen der horizontalen (H) und vertikalen (V) Polarisationskomponente um. Dies ermöglicht eine Polarisationskontrolle des Ausgangslichtes (*E̅ₒᵤₜ*= (*e*^{i*φ*}/√2) (*E̅_{H}*+ *e*ⁱ*^{ϕ}E̅_{V}*)) gegenüber der diagonalen Eingangspolarisation (*E̅ᵢₙ* = (1/√2) (*E̅_{H}* + *E̅_{V}*)) des Lichtes in den optischen Ring. Die globale Phase *φ*, die durch den Aufbau auf den Lichtzustand eingebracht wird, hat keinen Einfluss auf die Polarisation. Die relative Phase ist über das Modulationssignal des Phasenmodulators 130 steuerbar.

Der Phasenmodulator 130 moduliert eine Polarisationskomponente, indem die Polarisationskomponente mit der entsprechenden Polarisationsrichtung in seiner Phase verändert wird.

Fig. 4 stellt dar, wie die Komponenten der Modulatoreinheit 100 angesteuert werden, um die zu übertragende Information in die Polarisation des optischen Signals einzubringen.

Die Modulatoreinheit 100 enthält eine Energieversorgung 160 und eine Steuereinheit 150. Sowohl die Energieversorgung 160 als auch die Steuereinheit 150 ist mit der Lichtquelle 110 und dem Polarisationsmodul 105 sowie dessen Komponenten (Phasenmodulator 130, darin enthaltener Kristall 137) verbunden. Die Steuereinheit 150 kann aber auch direkt mit der Energieversorgung 160 verbunden sein, um eine von der Energieversorgung 160 an dem jeweiligen Anschluss ausgegebene elektrische Spannung vorzugeben.

Die Energieversorgung 160 versorgt die Lichtquelle 110 mit elektrischer Energie, damit die Lichtquelle das optische Signal, welches als Eingangssignal fungiert, erzeugt. Weiterhin versorgt die Energieversorgung 160 den Phasenmodulator 130 mit elektrischer Energie, beispielsweise einer elektrischen Spannung, die an dem Kristall 137 anliegt. Diese elektrische Spannung beeinflusst den Kristall 137 dahingehend, dass die Phase eines auf bestimmte Weise polarisierten Anteils eines passierenden optischen Signals verändert wird. Beispielsweise können Variationen der elektrischen Spannung die Phase unterschiedlich stark verändern.

Die Steuereinheit 150 ist ausgestaltet, die Energieversorgung 160 und/oder jede einzelne der Komponenten 110, 130 so anzusteuern, dass diese Komponenten mit der für ihre Funktion benötigten Energie versorgt werden. Hierzu kann die Steuereinheit 150 Steuerkommandos an die Komponenten 110, 130 und/oder Steuerkommandos an die Energieversorgung 160 senden.

Fig. 5 zeigt eine optische Signalübertragungsstrecke 200. Eine Modulatoreinheit 100 fungiert als Signalquelle bzw. Sender. Die Modulatoreinheit 100 moduliert die Polarisation eines optischen Signals wie oben beschrieben und sendet das modulierte optische Signal über einen Übertragungspfad 210. Der Übertragungspfad 210 ist beispielsweise ein leitungsloser optischer Pfad.

Das modulierte optische Signal wird von einer Gegenstelle empfangen und verarbeitet. Bei der Gegenstelle handelt es sich um den Empfänger 220. Die Modulatoreinheit 100 kann an Bord eines Satelliten angeordnet sein. Der Empfänger 220 kann auf der Erdoberfläche oder an Bord eines anderen Satelliten angeordnet sein.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Modulatoreinheit
- 105: Phasenschieber
- 106: erster Anschluss
- 107: zweiter Anschluss
- 110: Lichtquelle
- 111: Eingangssignal
- 112: aufgeteiltes Eingangssignal
- 113A: erste Polarisationskomponente mit erster Polarisationsrichtung
- 113B: zweite Polarisationskomponente mit zweiter Polarisationsrichtung
- 114A: erste Polarisationskomponente mit zweiter Polarisationsrichtung
- 114B: zweite Polarisationskomponente mit zweiter Polarisationsrichtung
- 115A: erste Polarisationskomponente mit zweiter Polarisationsrichtung
- 115B: zweite Polarisationskomponente mit erster Polarisationsrichtung
- 116: überlagertes optisches Signal
- 118: Ausgangssignal
- 120: Einspeiseeinheit, nicht-polarisierender Strahlteiler oder Zirkulator
- 122: polarisierender Strahlteiler
- 123: Polarisationsrotator (λ/2-Piättchen oder optischer Wellenleiter)
- 130: polarisationsabhängiger Phasenmodulator, elektro-optischer Modulator
- 132: erster Faraday-Rotator
- 133: erstes Magnetfeld
- 134: zweiter Faraday-Rotator
- 135: zweites Magnetfeld
- 137: Kristall
- 150: Steuereinheit
- 160: Energieversorgung
- 170: erste optische Teilstrecke
- 171: zweite optische Teilstrecke
- 200: optische Signalübertragungsstrecke
- 210: Übertragungspfad, optisches Signal
- 220: Empfänger
- 300: Satellit

## Patentansprüche

1. Modulatoreinheit (100) zum Modulieren der Phase einer
Polarisationskomponente eines optischen Signals, aufweisend:
eine Lichtquelle (110);
einen polarisierenden Strahlteiler (122); und
einen Phasenschieber (105);
wobei die Lichtquelle (110) ausgestaltet ist, ein optisches Signal auszugeben und als Eingangssignal (111) in Richtung des polarisierenden Strahlteilers (122) zu emittieren, wobei das optische Signal eine erste Polarisationskomponente mit einer ersten Polarisationsrichtung und eine zweite Polarisationskomponente mit einer zweiten Polarisationsrichtung enthält;
wobei der polarisierende Strahlteiler (122) ausgestaltet ist, das Eingangssignal (111) in die erste Polarisationskomponente (113A) und die zweite Polarisationskomponente (113B) aufzuteilen, die erste Polarisationskomponente (113A) über eine erste optische Teilstrecke (170) in einer ersten Richtung zu dem Phasenschieber (105) zu leiten, und die zweite Polarisationskomponente (113B) über eine zweite optische Teilstrecke (171) in einer zweiten Richtung zu dem Phasenschieber (105) zu leiten, wobei die zweite Richtung der ersten Richtung entgegengesetzt ist, so dass die erste Polarisationskomponente (113A) und die zweite Polarisationskomponente (113B) den Phasenschieber (105) in entgegensetzte Richtungen durchlaufen;
wobei die erste optische Teilstrecke (170) oder die zweite optische Teilstrecke (171) einen Polarisationsrotator (123) enthält, welcher ausgestaltet ist, eine Polarisationsrichtung von optischen Signalen, welche den Polarisationsrotator (123) passieren, so zu verändern, dass die erste Polarisationskomponente (113A) dieselbe Polarisationsrichtung hat wie die zweite Polarisationskomponente (113B), wenn die erste Polarisationskomponente (113A) und die zweite Polarisationskomponente (113B) auf den Phasenschieber (105) treffen;
wobei der Phasenschieber (105) einen ersten Faraday-Rotator (132), einen zweiten Faraday-Rotator (134) und einen polarisationsabhängigen Phasenmodulator (130) aufweist;
wobei der polarisationsabhängige Phasenmodulator (130) entlang eines optischen Pfads durch den Phasenschieber (105) zwischen dem ersten Faraday-Rotator (132) und dem zweiten Faraday-Rotator (134) angeordnet ist;
wobei die erste optische Teilstrecke (170) optisch mit dem ersten Faraday-Rotator (132) gekoppelt ist und die zweite optische Teilstrecke (171) optisch mit dem zweiten Faraday-Rotator (134) gekoppelt ist;
wobei der erste Faraday-Rotator (132) so konfiguriert ist, dass er eine Polarisationsrichtung von passierenden optischen Signalen in einer ersten Polarisationsveränderungsrichtung verändert;
wobei der zweite Faraday-Rotator (134) so konfiguriert ist, dass er eine Polarisationsrichtung von passierenden optischen Signalen in einer zweiten Polarisationsveränderungsrichtung verändert;
wobei die zweite Polarisationsveränderungsrichtung von der ersten Polarisationsveränderungsrichtung verschieden ist, so dass die erste Polarisationskomponente und die zweite Polarisationskomponente, wenn sie den polarisationsabhängigen Phasenmodulator (130) passieren, in senkrecht zueinander stehenden Polarisationsrichtungen polarisiert sind;
wobei der polarisationsabhängige Phasenmodulator (130) ausgestaltet ist, eine Phasenmodulation lediglich einer Polarisationskomponente auszuführen;
wobei der polarisierende Strahlteiler (122) angeordnet ist, die erste Polarisationskomponente über die zweite optische Teilstrecke (171) zu erhalten und die zweite Polarisationskomponente über die erste optische Teilstrecke (170) zu erhalten, und die erste Polarisationskomponente und die zweite Polarisationskomponente zu einem überlagerten optischen Signal (116) zusammenzusetzen.

2. Modulatoreinheit (100) nach Anspruch 1,
wobei der erste Faraday-Rotator (132) so konfiguriert ist, dass er die Polarisationsrichtung von passierenden optischen Signalen in der ersten Polarisationsveränderungsrichtung um 45° verändert;
wobei der zweite Faraday-Rotator (134) so konfiguriert ist, dass er die Polarisationsrichtung von passierenden optischen Signalen in der zweiten Polarisationsveränderungsrichtung um 45° verändert;
wobei die erste Polarisationsveränderungsrichtung der zweiten Polarisationsveränderungsrichtung entgegengesetzt ist.

3. Modulatoreinheit (100) nach Anspruch 1 oder 2,
wobei der Polarisationsrotator (123) eine λ/2 - Platte oder ein optischer Wellenleiter ist, und so angeordnet und ausgestaltet ist, dass der Polarisationsrotator (123) die Polarisationsrichtung des passierenden optischen Signals verändert.

4. Modulatoreinheit (100) nach einem der vorhergehenden Ansprüche,
wobei die erste optische Teilstrecke (170) und/oder die zweite optische Teilstrecke (171) als Freistrahl-Aufbau oder als optischer Wellenleiter realisiert ist.

5. Modulatoreinheit (100) nach einem der vorhergehenden Ansprüche,
wobei der polarisationsabhängige Phasenmodulator (130) einen Kristall (137) aufweist, welcher ausgestaltet ist, mit einer elektrischen Spannung beaufschlagt zu werden und dabei seinen Brechungsindex zu verändern, wodurch die Phase der ersten Polarisationskomponente des optischen Signals verändert wird.

6. Modulatoreinheit (100) nach Anspruch 5,
wobei die Modulatoreinheit (100) ausgestaltet ist, die an dem Kristall (137) anliegende elektrische Spannung über der Zeit zu variieren.

7. Modulatoreinheit (100) nach einem der voranstehenden Ansprüche,
wobei die Lichtquelle (110) ausgestaltet ist, Licht mit einer definierten optischen Mode auszugeben.

8. Modulatoreinheit (100) nach einem der voranstehenden Ansprüche,
wobei die Modulatoreinheit (100) ausgestaltet ist, die Lichtquelle (110) so anzusteuern, dass die Lichtquelle (110) kontinuierliche oder gepulste optische Signale emittiert.

9. Optische Signalübertragungsstrecke (200), aufweisend
eine Modulatoreinheit (100) nach einem der Ansprüche 1 bis 8;
einen Empfänger (220), welcher ausgestaltet ist, optische Signale zu empfangen;
wobei die Modulatoreinheit (100) angeordnet ist, das Ausgangssignal (118) in Richtung des Empfängers (220) zu emittieren.

10. Satellit (300) mit einer Modulatoreinheit (100) nach einem der Ansprüche 1 bis 8.

## Claims

1. Modulator unit (100) for modulating the phase of a polarization component of an optical signal, including:
a light source (110);
a polarizing beam splitter (122); and
a phase shifter (105);
wherein the light source (110) is designed to output an optical signal and to emit it as an input signal (111) in the direction of the polarizing beam splitter (122), wherein the optical signal contains a first polarization component having a first polarization direction and a second polarization component having a second polarization direction;
wherein the polarizing beam splitter (122) is designed to split the input signal (111) into the first polarization component (113A) and the second polarization component (113B), to conduct the first polarization component (113A) via a first optical partial link (170) in a first direction to the phase shifter (105), and to conduct the second polarization component (113B) via a second optical partial link (171) in a second direction to the phase shifter (105), wherein the second direction is opposite to the first direction, so that the first polarization component (113A) and the second polarization component (113B) pass through the phase shifter (105) in opposite directions;
wherein the first optical partial link (170) or the second optical partial link (171) contains a polarization rotator (123), which is designed to change a polarization direction of optical signals that pass the polarization rotator (123) such that the first polarization component (113A) has the same polarization direction as the second polarization component (113B) when the first polarization component (113A) and the second polarization component (113B) are incident on the phase shifter (105);
wherein the phase shifter (105) includes a first Faraday rotator (132), a second Faraday rotator (134), and a polarization-dependent phase modulator (130);
wherein the polarization-dependent phase modulator (130) is arranged along an optical path through the phase shifter (105) between the first Faraday rotator (132) and the second Faraday rotator (134);
wherein the first optical partial link (170) is optically coupled to the first Faraday rotator (132) and the second optical partial link (171) is optically coupled to the second Faraday rotator (134);
wherein the first Faraday rotator (132) is configured such that it changes a polarization direction of passing optical signals in a first polarization change direction;
wherein the second Faraday rotator (134) is configured such that it changes a polarization direction of passing optical signals in a second polarization change direction;
wherein the second polarization change direction is different from the first polarization change direction, so that the first polarization component and the second polarization component, when they pass the polarization-dependent phase modulator (130), are polarized in polarization directions perpendicular to one another;
wherein the polarization-dependent phase modulator (130) is designed to execute a phase modulation of only one polarization component;
wherein the polarizing beam splitter (122) is arranged to receive the first polarization component via the second optical partial link (171) and to receive the second polarization component via the first optical partial link (170), and to combine the first polarization component and the second polarization component to form a superimposed optical signal (116).

2. Modulator unit (100) according to Claim 1,
wherein the first Faraday rotator (132) is configured such that it changes the polarization direction of passing optical signals in the first polarization change direction by 45°;
wherein the second Faraday rotator (134) is configured such that it changes the polarization direction of passing optical signals in the second polarization change direction by 45°;
wherein the first polarization change direction is opposite to the second polarization change direction.

3. Modulator unit (100) according to Claim 1 or 2,
wherein the polarization rotator (123) is a half-wave plate or an optical waveguide, and is arranged and designed such that the polarization rotator (123) changes the polarization direction of the passing optical signal.

4. Modulator unit (100) according to any one of the preceding claims,
wherein the first optical partial link (170) and/or the second optical partial link (171) is implemented as a free space structure or as an optical waveguide.

5. Modulator unit (100) according to any one of the preceding claims,
wherein the polarization-dependent phase modulator (130) includes a crystal (137), which is designed to be subjected to an electrical voltage and in this case to change its index of refraction, by which the phase of the first polarization component of the optical signal is changed.

6. Modulator unit (100) according to Claim 5,
wherein the modulator unit (100) is designed to vary the electrical voltage applied at the crystal (137) over time.

7. Modulator unit (100) according to any one of the preceding claims,
wherein the light source (110) is designed to output light having a defined optical mode.

8. Modulator unit (100) according to any one of the preceding claims,
wherein the modulator unit (100) is designed to activate the light source (110) such that the light source (110) emits continuous or pulsed optical signals.

9. Optical signal transmission link (200), including
a modulator unit (100) according to any one of Claims 1 to 8;
a receiver (220), which is designed to receive optical signals;
wherein the modulator unit (100) is arranged to emit the output signal (118) in the direction of the receiver (220) .

10. Satellite (300) comprising a modulator unit (100) according to any one of Claims 1 to 8.

## Revendications

1. Unité de modulation (100) destinée à moduler la phase d'une composante de polarisation d'un signal optique, ladite unité de modulation comportant :
une source de lumière (110) ;
un séparateur de faisceau polarisant (122) ; et
un déphaseur (105) ;
la source de lumière (110) étant conçue pour délivrer un signal optique et l'émettre comme signal d'entrée (111) en direction du séparateur de faisceau polarisant (122), le signal optique comportant une première composante de polarisation qui présente une première direction de polarisation et une deuxième composante de polarisation qui présente une deuxième direction de polarisation ;
le séparateur de faisceau polarisant (122) étant conçu pour diviser le signal d'entrée (111) en la première composante de polarisation (113A) et la deuxième composante de polarisation (113B), et pour diriger la première composante de polarisation (113A) sur une première section de trajet optique (170) dans une première direction vers le déphaseur (105), et pour diriger la deuxième composante de polarisation (113B) sur une deuxième section de trajet optique (171) dans une deuxième direction vers le déphaseur (105), la deuxième direction étant opposée à la première direction de sorte que la première composante de polarisation (113A) et la deuxième composante de polarisation (113B) traversent le déphaseur (105) dans des directions opposées ;
la première section de trajet optique (170) ou la deuxième section de trajet optique (171) comportant un rotateur de polarisation (123) qui est conçu pour modifier une direction de polarisation de signaux optiques qui traversent le rotateur de polarisation (123) de telle sorte que la première composante de polarisation (113A) ait la même direction de polarisation que la deuxième composante de polarisation (113B) lorsque la première composante de polarisation (113A) et la deuxième composante de polarisation (113B) sont incidentes au déphaseur (105) ;
le déphaseur (105) comportant un premier rotateur de Faraday (132), un deuxième rotateur de Faraday (134) et un modulateur de phase (130) dépendant de la polarisation ;
le modulateur de phase (130) dépendant de la polarisation étant disposé le long d'un chemin optique à travers le déphaseur (105) entre le premier rotateur de Faraday (132) et le deuxième rotateur de Faraday (134) ;
la première section de trajet optique (170) étant couplée optiquement au premier rotateur de Faraday (132) et la deuxième section de trajet optique (171) étant couplée optiquement au deuxième rotateur de Faraday (134) ;
le premier rotateur de Faraday (132) étant conçu pour modifier une direction de polarisation de signaux optiques passants dans une première direction de modification de polarisation ;
le deuxième rotateur de Faraday (134) est configuré pour changer une direction de polarisation de signaux optiques passants dans une deuxième direction de changement de polarisation ;
la deuxième direction de modification de polarisation étant différente de la première direction de modification de polarisation de telle sorte que la première composante de polarisation et la deuxième composante de polarisation, lorsqu'elles traversent le modulateur de phase (130) dépendant de la polarisation, soient polarisées dans des directions de polarisation perpendiculaires l'une à l'autre ;
le modulateur de phase (130) dépendant de la polarisation étant conçu pour effectuer une modulation de phase d'une seule composante de polarisation ;
le séparateur de faisceau polarisant (122) étant disposé de façon à obtenir la première composante de polarisation sur la deuxième section de trajet optique (171) et pour obtenir la deuxième composante de polarisation sur la première section de trajet optique (170), et pour combiner la première composante de polarisation et la deuxième composante de polarisation afin de former un signal optique superposé (116).

2. Unité de modulation (100) selon la revendication 1,
le premier rotateur de Faraday (132) étant conçu pour modifier la direction de polarisation de signaux optiques passants de 45° dans la première direction de modification de polarisation ;
le deuxième rotateur de Faraday (134) étant conçu pour modifier la direction de polarisation de signaux optiques passants de 45° dans la deuxième direction de modification de polarisation ;
la première direction de modification de polarisation étant opposée à la deuxième direction de modification de polarisation.

3. Unité de modulation (100) selon la revendication 1 ou 2,
le rotateur de polarisation (123) étant une plaque λ/2 ou un guide d'ondes optique, et étant disposé et conçu de telle sorte que le rotateur de polarisation (123) modifie la direction de polarisation du signal optique passant.

4. Unité de modulation (100) selon l'une des revendications précédentes,
la première section de trajet optique (170) et/ou la deuxième section de trajet optique (171) étant réalisées sous la forme d'une structure à faisceau libre ou d'un guide d'ondes optique.

5. Unité de modulation (100) selon l'une des revendications précédentes,
le modulateur de phase (130) dépendant de la polarisation comportant un cristal (137) qui est conçu pour être soumis à une tension électrique et modifier ainsi son indice de réfraction, ce qui permet de modifier la phase de la première composante de polarisation du signal optique.

6. Unité de modulation (100) selon la revendication 5,
l'unité de modulation (100) étant conçue pour faire varier dans le temps la tension électrique appliquée au cristal (137).

7. Unité de modulation (100) selon l'une des revendications précédentes,
la source de lumière (110) étant conçue pour délivrer une lumière ayant un mode optique défini.

8. Unité de modulation (100) selon l'une des revendications précédentes,
l'unité de modulation (100) étant conçue pour commander la source de lumière (110) de telle sorte que la source de lumière (110) émette des signaux optiques continus ou pulsés.

9. Section de transmission de signal optique (200), comportant
une unité de modulation (100) selon l'une des revendications 1 à 8 ;
un récepteur (220) conçu pour recevoir des signaux optiques ;
l'unité de modulation (100) étant disposée de façon à émettre le signal de sortie (118) en direction du récepteur (220).

10. Satellite (300) comprenant une unité de modulation (100) selon l'une des revendications 1 à 8.
